# DEMANDE DE BREVET EUROPEEN

(11) **EP 1 391 346 A1**
(43) Date de publication de la demande: **25.02.2004**
(21) Numéro de dépôt: 03360075.0
(22) Date de dépôt: 23.06.2003
(51) Int. Cl.: B60P 3/30

(54) **Véhicule de voirie**

(30) Priorité: 29.07.2002 FR 0209585
(71) Demandeur: Jungo, Nicolas, 6370 Stans (CH)
(72) Inventeur: Jungo, Nicolas, 6370 Stans (CH)
(74) Mandataire: Burkard, Thierry

(57) **Abrégé**

L'invention concerne un véhicule destiné à l'entretien des voiries par aspersion de fluides, comportant des cuves latérales formant l'habillage du véhicule et des moyens pour optimiser le refroidissement du moteur et de l'huile, sans risque de colmatage par les débris ou poussières présents dans l'air aspiré.

Ce véhicule est composé d'une cabine (1) montée sur la partie avant d'un châssis articulé (2) sur la partie arrière duquel sont disposés un moteur thermique (3), un réservoir à huile (4), un radiateur (5) associé à une hélice (6), un filtre à air (10) et quatre réservoirs (7, 8, 17, 18) disposés deux à deux respectivement sur les côtés et à l'arrière du véhicule. Le réservoir à huile (4) est disposé de manière à entourer le radiateur (5) par le dessus, lequel est placé face à la route.

## Description

La présente invention concerne un véhicule de voirie, et plus particulièrement une structure pour véhicule destiné à l'entretien des voiries par aspersion de fluides, comportant des cuves latérales formant l'habillage du véhicule et des moyens pour optimiser le refroidissement du moteur et de l'huile, sans risque de colmatage par les débris ou poussières présents dans l'air aspiré.

Les véhicules de voirie traditionnels comportent pour l'essentiel une cabine disposée à l'avant d'un châssis qui est le plus souvent articulé. Les deux parties du châssis reçoivent sous le dessous les moyens de nettoyage, tels que par exemple des brosses ou des jets d'aspersion, et des moyens d'aspiration, et la partie supérieure arrière du châssis reçoit une ou plusieurs cuves, ainsi que des réservoirs contenant le fluide d'aspersion. L'air de refroidissement est aspiré par le dessous et rejoint un radiateur qui est disposé soit sur les côtés, soit à l'arrière du châssis du véhicule.

Ces agencements de type connus fournissent des résultats satisfaisants en terme d'efficacité des opérations de lavage ou de nettoyage, mais présentent néanmoins certains inconvénients.

En premier lieu, le radiateur et l'hélice du radiateur nécessitent un entretien régulier en raison des poussières qui sont aspirées.

Par ailleurs, le refroidissement par air du radiateur exige une prise d'air qui ne peut être effectuée que par le dessous, c'est à dire à l'un des endroits où le risque d'aspiration de poussières et de débris est le plus important, puisque dans les véhicules de type connu, le radiateur est disposé latéralement ou en arrière.

Ceci impose des opérations de maintenance à intervalles répétés et contribue grandement à réduire la durée d'utilisation du véhicule, et à terme, la durée de vie de certains composants.

Par ailleurs, il est nécessaire de, prévoir des réservoirs de grandes dimensions si l'on souhaite traiter des surfaces ou des voiries importantes, sans avoir à revenir en atelier de manière répétée pour procéder au remplissage des réservoirs.

Ceci a pour conséquence que pour intervenir sur les éléments mécaniques du véhicule qui sont situés sous les réservoirs, au niveau du châssis, il est nécessaire d'immobiliser le véhicule et de procéder à des opérations de démontage et de remontage qui peuvent être longues et qui génèrent un coût pour l'exploitant.

Or, en raison même du type d'opérations effectuées par ces véhicules, à savoir la collecte de déchets ou de débris, il est nécessaire d'intervenir très fréquemment sur des éléments tels que filtre à air ou filtre à huile, qui peuvent être colmatés par les poussières ou des salissures.

La présente invention se propose de remédier aux inconvénients mentionnés ci-dessus en réalisant un véhicule de voirie dans lequel les éléments mécaniques sont disposés de manière à éliminer ou réduire de manière sensible les risques de colmatage des filtres et du radiateur et auxquels il est possible d'accéder facilement pour des opérations de maintenance.

Dans ce but, le véhicule selon l'invention est caractérisé en ce qu'il comporte un radiateur monté selon la direction de déplacement du véhicule et qui est entouré par le réservoir à huile, et des réservoirs latéraux qui forment en même temps les flancs du véhicule et qui peuvent être articulés autour d'un axe vertical.

La présente invention sera mieux comprise au travers de la description donnée ci-après à titre non limitatif d'un exemple de mise en oeuvre, et en référence aux dessins annexés dans lesquels :
- la figure 1 est une vue en élévation de trois-quarts arrière d'un véhicule de voirie selon la présente invention,

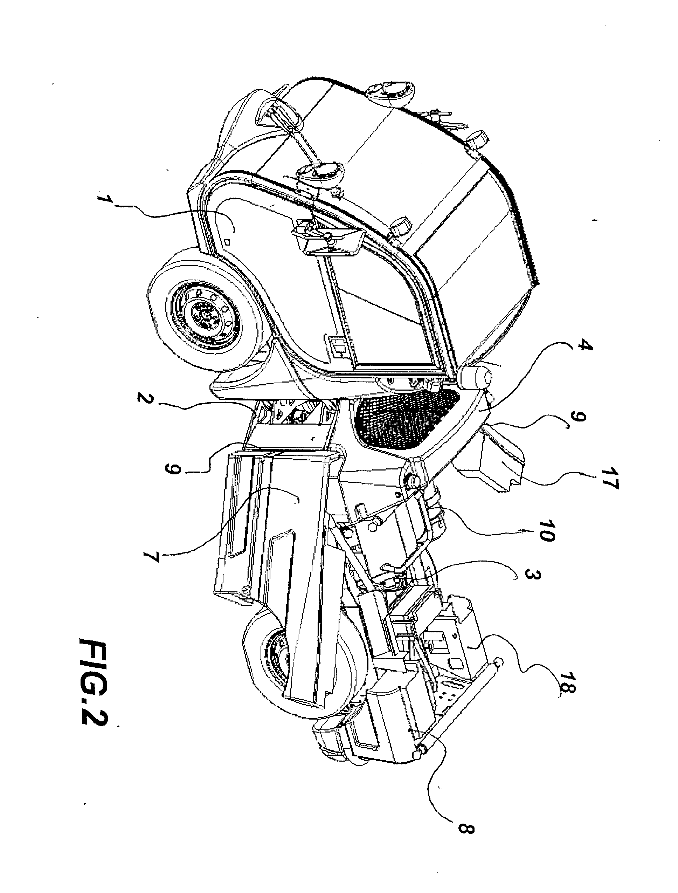

- la figure 2 est une vue en élévation de trois quart avant du véhicule représenté à la figure 1,

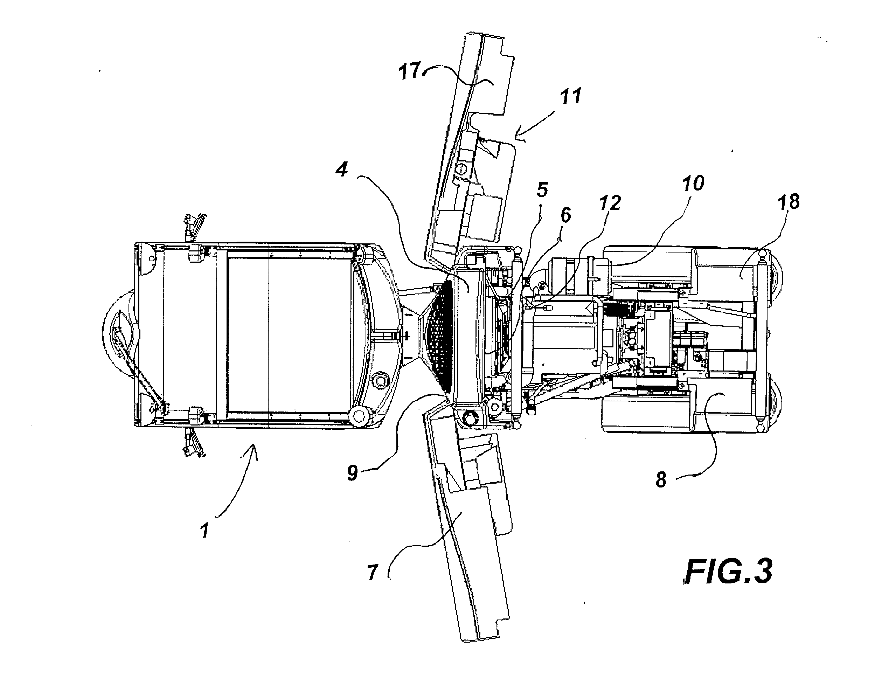

- la figure 3 est une vue du dessus d'un véhicule selon l'invention,

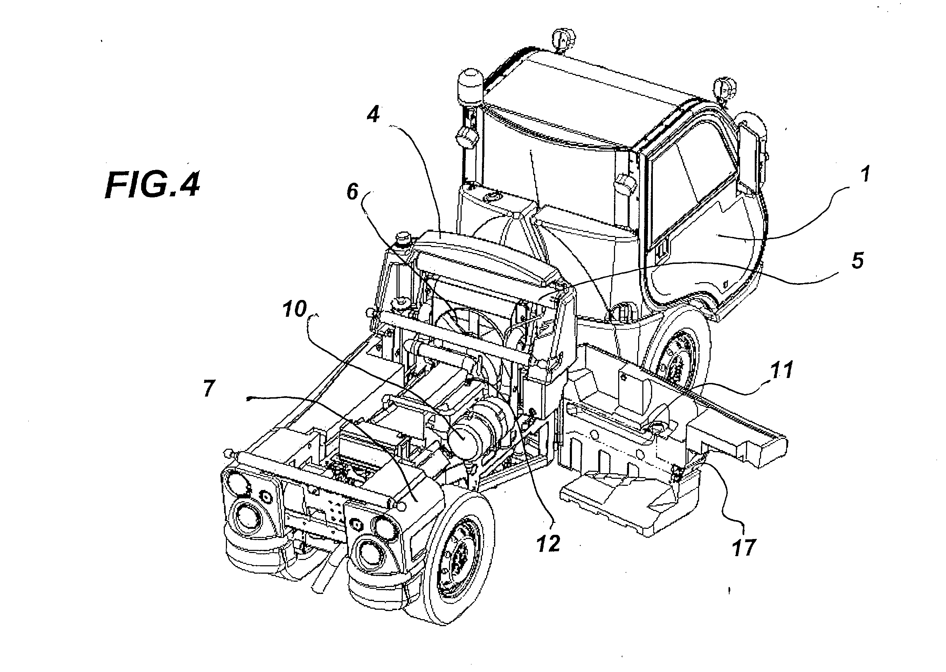

- la figure 4 est une vue arrière d'un véhicule selon l'invention, et

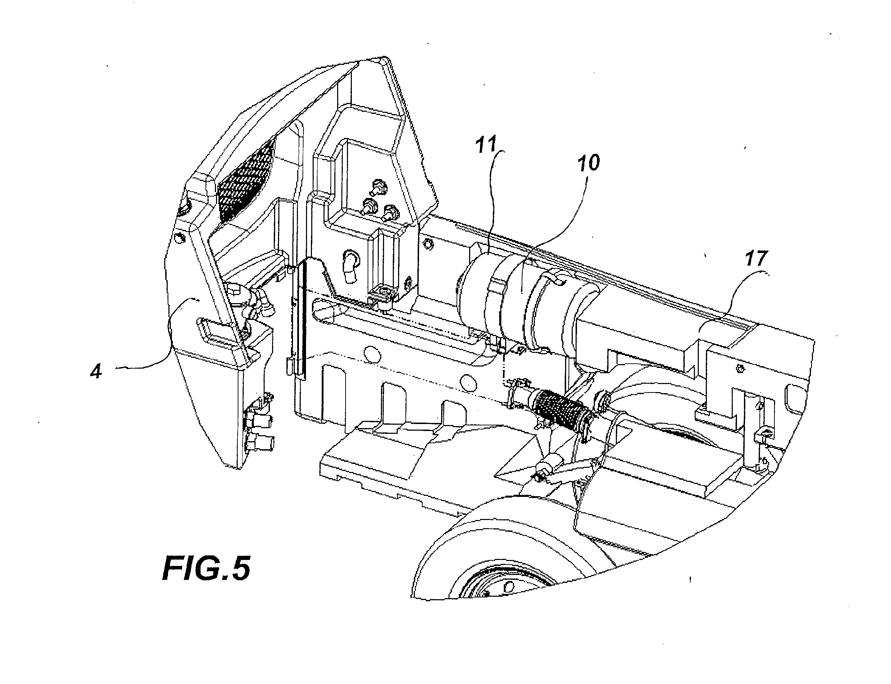

- la figure 5 est une vue de détail présentant le positionnement du filtre à air par rapport au réservoir latéral.

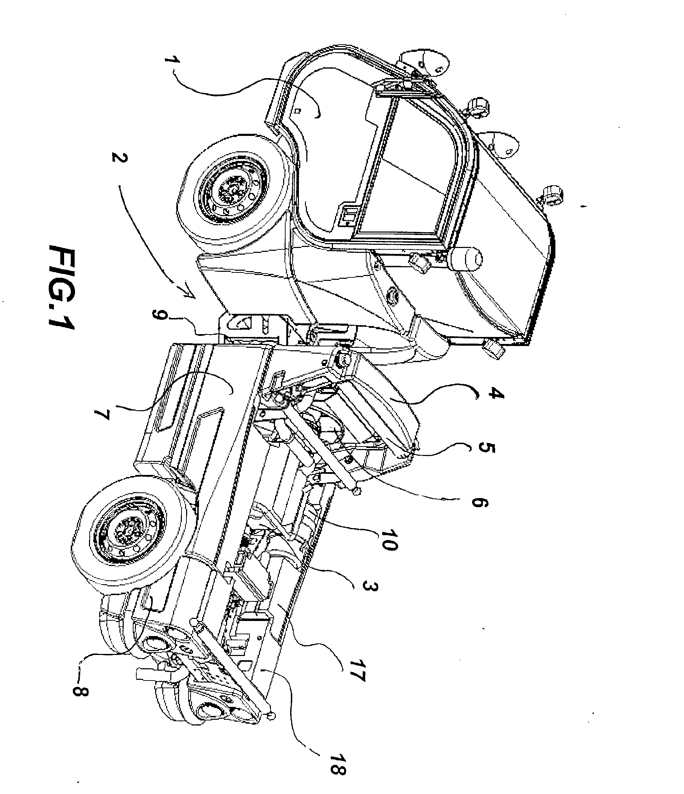

En référence aux dessins annexés et plus particulièrement à la figure 1, le véhicule de voirie selon la présente invention est composé d'une cabine (1) montée sur la partie avant d'un châssis articulé (2). Sur la partie arrière du châssis (2) sont disposés les éléments mécaniques à savoir le moteur thermique (3), un réservoir à huile (4) ainsi que les moyens utilisés pour assurer le refroidissement du moteur thermique composés d'un radiateur (5) associé à une hélice (6), et un filtre à air (10).

Le réservoir à huile (4) est disposé de manière à entourer par le dessus le radiateur (5), qui est placé face à la route, à l'inverse des solutions traditionnelles qui prévoient un positionnement latéral ou arrière.

Cette particularité permet de placer l'hélice (6) dudit radiateur (5) dans le prolongement direct du moteur thermique (3), et d'assurer ainsi une prise directe de l'hélice sur le moteur, sans qu'il soit nécessaire d'avoir recours à un second moteur, comme par exemple un moteur hydraulique, pour assurer l'entraînement de l'arbre de l'hélice (6).

On réalise ainsi une économie de place particulièrement sensible par rapport aux véhicules de type connu dans lesquels il n'y a pas de possibilité de prise directe de l'arbre de l'hélice du radiateur sur le moteur thermique, sauf à prévoir un moteur transversal, ce qui induit une forte augmentation des dimensions du véhicule.

Grâce à cette disposition particulière du réservoir d'huile sur et autour du radiateur, on dispose d'une plus grande surface de refroidissement de l'air. aspiré, et on améliore ainsi de manière particulièrement sensible les performances du véhicule.

Notamment, on obtient un refroidissement de l'huile beaucoup plus rapide, grâce à la surface importante du réservoir et au flux d'air frais qui est guidé par ce réservoir du fait de son positionnement face à la route.

Sont également disposés sur la partie arrière du châssis (2) quatre réservoirs (7, 8, 17, 18) contenant de l'eau et reliés au système de projection de l'eau sur la voirie, qui ne sont pas ici représentés.

Les deux plus grands réservoirs (7) et (17) sont disposés sur les flancs du véhicule, dont ils forment par ailleurs l'habillage latéral.

Les deux autres réservoirs (8) et (18) sont de dimensions plus petites et sont disposés en arrière du véhicule, dans le prolongement des réservoirs latéraux (7) et (17).

Selon une forme de réalisation préférentielle, on ménage un logement (11) dans la paroi intérieure du réservoir latéral (17).

Lorsque le réservoir latéral (17) est en place, le logement (11) entoure le filtre à air (10), qui est fixé sur le châssis.

Selon une forme avantageuse de réalisation représentée plus particulièrement sur la figure (2), les réservoirs latéraux (7) et (17) seront être articulés autour d'un axe (9), de telle sorte qu'ils pourront être déployés vers l'extérieur pour ainsi libérer l'accès aux éléments composants situés dans la partie arrière inférieure du châssis (2).

Grâce à cette caractéristique, on pourra très rapidement et avec une immobilisation minimale du véhicule procéder aux opérations de maintenance et de nettoyage des éléments mécaniques, notamment le radiateur et les différents filtres présents dans la structures du véhicule.

L'aspiration de l'air est effectuée non pas comme dans les véhicules de type classique en utilisant un tuyau sensiblement flexible , mais au moyen d'un conduit demi ouvert qui fait partie intégrante du réservoir d'eau latéral (17) et complété par un couvercle en acier. Le conduit peut être obtenu par rotomoulage de matériaux tel que le polyéthylène.

On peut ainsi avantageusement prévoir des moyens d'insonorisation, qui seront fixés sur le couvercle, lequel pourra facilement être nettoyé ou remplacé, puisqu'il est démontable.

Le conduit d'arrivée d'air (12) est disposé en amont du filtre (10) et peut être facilement désolidarisé lorsqu'il s'agit d'accéder à ce filtre pour procéder à des opérations de nettoyage, puisque celui-ci est inséré dans le logement (11) ménagé dans la paroi du réservoir à eau (17). De la sorte, l'air d'admission du moteur peut être aspiré par le conduit (12) devant le radiateur (5), dans une zone où celui-ci est particulièrement propre et frais.

Cette modalité procure plusieurs avantages.

En premier lieu, on limite ainsi l'encombrement de la partie arrière du véhicule et on peut ainsi proposer une structure de véhicule à encombrement réduit, avec une dimension minimale en largeur.

En second lieu, le positionnement du filtre à air permet d'assurer une aspiration d'air propre, donc de limiter les risques de colmatage au moyen de salissures qui seraient présentes dans l'environnement du filtre à air.

Incidemment, cette modalité permet de réduire les nuisances sonores liées à l'aspiration de l'air. Dans le cas de l'utilisation d'un moteur diesel, ces nuisances sont essentiellement liées à la disposition des différents composants et notamment à l'emplacement à partir duquel se fait l'aspiration de l'air de refroidissement.

Si on aspire l'air de refroidissement devant le radiateur (5), les ondes sonores qui parviennent jusqu'à l'embouchure d'aspiration ne seront presque pas audibles de l'extérieur du véhicule car elles seront en partie réintroduites dans le compartiment moteur, dans lequel on pourra prévoir des moyens d'insonorisation appropriés.

## Revendications

1. Véhicule de voirie composé d'une cabine (1) montée sur la partie avant d'un châssis articulé (2) sur la partie arrière duquel sont disposés un moteur thermique (3), un réservoir à huile (4), un radiateur (5) associé à une hélice (6), un filtre à air (10) et quatre réservoirs (7, 8, 17, 18) disposés deux à deux respectivement sur les côtés et à l'arrière du véhicule, **caractérisé en ce que** le réservoir à huile (4) est disposé de manière à entourer le radiateur (5) par le dessus.

2. Véhicule de voirie suivant la revendication 1, **caractérisé en ce que** le radiateur (5) est placé face à la route.

3. Véhicule de voirie suivant l'une des revendications 1 ou 2, **caractérisé en ce que** l'hélice (6) du radiateur (5) est montée en prise directe sur le moteur thermique (3).

4. Véhicule de voirie suivant l'une des revendications précédentes, **caractérisé en ce que** l'air d'admission du moteur est aspiré devant le radiateur (5) par un conduit (12) disposé en amont du filtre à air (10).

5. Véhicule de voirie suivant la revendication 4, **caractérisé en ce que** le filtre à air (10) est fixé sur le châssis (2).

6. Véhicule de voirie suivant la revendication 4, **caractérisé en ce que** le conduit (12) fait partie intégrante du réservoir d'eau latéral (17).

7. Véhicule de voirie suivant la revendication 4, **caractérisé en ce que** le conduit (12) complété par un couvercle en acier.

8. Véhicule de voirie suivant la revendication 4, **caractérisé en ce que** le conduit (12) est réalisé par rotomoulage.

9. Véhicule de voirie suivant l'une des revendications précédentes, **caractérisé en ce** la paroi intérieure du réservoir latéral (17) comporte un logement (11) prévu pour recevoir le filtre à air (10).

10. Véhicule de voirie suivant l'une des revendications précédentes, **caractérisé en ce que** les réservoirs latéraux (7) et (17) sont articulés sur les flancs du véhicule autour d'une axe (9) pour en former l'habillage latéral.
